# EUROPÄISCHE PATENTSCHRIFT

(11) **EP 2 918 855 B1**
(45) Veröffentlichungstag und Bekanntmachung des Hinweises auf die Patenterteilung: **24.08.2016**
(21) Anmeldenummer: 14159203.0
(22) Anmeldetag: 12.03.2014
(51) Int. Cl.: F16B 7/04, F16J 15/00

(54) **Dichtprofil**
Seal profile
Profil d'étanchéité

(43) Veröffentlichungstag der Anmeldung: 16.09.2015
(73) Patentinhaber: Multipond Wägetechnik GmbH, 84479 Waldkraiburg (DE)
(72) Erfinder: Peters, Andreas, 84544 Aschau am Inn (DE)
(74) Vertreter: Prüfer & Partner mbB Patentanwälte · Rechtsanwälte

(56) Entgegenhaltungen:
- EP-A2- 1 754 893
- DE-A1- 2 104 141
- DE-U1-202005 013 777

## Beschreibung

Die vorliegende Erfindung bezieht sich auf ein Dichtprofil zur Verwendung in einem Klemmstück, um Teile im Klemmstück zu klemmen und dabei sämtliche Hohlräume oder Spalten abzudichten.

Besonders in der Lebensmittelindustrie oder lebensmittelverarbeitenden Industrie können einzelne Produktions- bzw. Verarbeitungsschritte unterschiedliche Anforderungen an die hygienische Gestaltung von Anlagen stellen. Nicht hygienegerechte Konstruktionen können das Risiko einer Kontamination durch Mikroorganismen erhöhen, ebenso wie den Eintrag von Verunreinigungen, z.B. von Lebensmitteln aus einem früheren Verarbeitungsschritt, der in derselben Anlage vorgenommen wurde. Das Grundprinzip der hygienegerechten Gestaltung ist es jedoch, dass sämtliche Ausrüstungs- oder Anlagenteile nicht durch einen Anstieg der Konzentration von relevanten Mikroorganismen, Schmutz, Insekten, anderes Ungeziefer oder anderen Verunreinigungen belastet werden dürfen, welche sich häufig in Vertiefungen, Spalten, Schlitzen, Bohrungen, Toträumen und freiliegenden Gewinden anlagern.

Anlagen und Teile von Anlagen in der Lebensmittelindustrie weisen häufig Klemmverbindungen auf. So werden zum Beispiel Profile aus Rohr- oder Vollmaterial mit Klemmverbindungen verbunden oder festgehalten. Es muss möglich sein, Klemmverbindungen entlang der Profile stufenlos zu verschieben, wenn sie nicht im gespannten Zustand vorliegen. Es sind unterschiedliche Ausführungsformen von Klemmverbindungen bekannt. Eine herkömmliche Klemmverbindung kann durch ein Metallteil mit Klemmvorrichtungen zur Klemmung von geklemmten Teilen erfolgen. Die Klemmung erfolgt durch Festziehen einer Schraube zwischen zwei Klemmabschnitten einer Klemmverbindungsvorrichtung. In einem Anlagenteil können mehrere Klemmvorrichtungen vorhanden sein, z.B. in einem Kreuzklemmstück. Damit eine kraftschlüssige Klemmung vorgenommen werden kann, muss zwischen den Klemmabschnitten der Klemmverbindungsvorrichtung ein Spannschlitz vorhanden sein, und die Klemmabschnitte müssen durch eine Schraube verbunden und verklemmbar sein, um eine Klemmung vorzunehmen oder zu lösen. Wird die Schraube, welche beide Klemmabschnitte miteinander verbindet, festgezogen, wird der Spannschlitz zwischen beiden sich gegenüberliegenden Klemmabschnitten schmaler, wodurch die Klemmung des geklemmten Teils erfolgt.

Wenn ein Kreuzklemmstück montiert ist, sind nicht abgedichtete doppelte Flächen Metall/Metall sowie Hohlräume und Vertiefungen (z.B. der Spannschlitz) vorhanden. Diese sind nur sehr mangelhaft reinigungsfähig. Ein Selbstablaufen von anhaftenden Flüssigkeiten, z.B. durch Kondensation von Produktionsrückständen, ist ebenfalls nicht möglich.

Ein solches Bauteil weist somit deutliche Nachteile für die Verwendung in der Lebensmittelindustrie oder Lebensmittel verarbeitenden Industrie auf.

Die DE 21 04 141 A1 zeigt ein Dichtprofil für ein Lagergehäuse.

Es ist Aufgabe der vorliegenden Erfindung, ein Dichtprofil für ein Verbindungsteil, insbesondere ein Kreuzklemmstück, zur Verfügung zu stellen, welches hygienegerecht gestaltet ist und in einer Anlage der Lebensmittelindustrie oder Lebensmittel verarbeitenden Industrie verwendet werden kann. Hauptaspekte sind eine einfache Reinigbarkeit, der Schutz des Produktes vor Kontamination und die Verhinderung der Ansammlung von Schmutz, Mikroorganismen, Insekten und anderem Ungeziefer. Daher ist es nötig, eine Abdichtung für ein Verbindungsstück zu Verfügung zu stellen, so dass dieses ohne Spalten und weitere Hohlräume, in denen sich Schmutz, Bakterien, oder anderes ansammeln können, verwendet werden kann.

Diese Aufgabe wird durch ein Dichtprofil mit den Merkmalen gemäß Anspruch 1, sowie durch ein System gemäß Anspruch 8 oder 10, sowie durch eine Klemmverbindungsvorrichtung gemäß Anspruch 9, sowie durch eine Verwendung gemäß Anspruch 11 gelöst. Weitere vorteilhafte Ausgestaltungen der Erfindung sind Gegenstand der abhängigen Ansprüche.

Die Erfindung beinhaltet ein Dichtprofil, welches in einem Verbindungsteil bzw. Klemmstück mit einer oder mehreren Klemmvorrichtungen zum Einsatz kommt. Dieses Dichtprofil ist durchgängig aus einem Stück gefertigt und umschließt das geklemmte Teil auf beiden Seiten der Klemmvorrichtung und dichtet die Spalten zwischen geklemmtem Teil und Klemmvorrichtung lückenlos ab, und füllt außerdem den Spannschlitz komplett aus. Das durchgängige Dichtprofil ist von der Klemmvorrichtung aufnehmbar, beispielsweise von einer entsprechenden Aussparung, die in der Klemmvorrichtung hierfür vorgesehen ist.

Durch die Verwendung des durchgängigen Dichtprofils ist eine Klemmverbindung so realisierbar, dass in einem Verbindungsteil, z.B. Kreuzklemmstück, keine Spalten, Rillen, sonstige Toträume oder Vertiefungen vorhanden sind, in denen sich Kondenswasser oder Produktrückstände sowie andere Verunreinigungen ansammeln könnten, da alle Spalten und Hohlräume ausgefüllt (z.B. der Spannschlitz) bzw. abgedichtet (z.B. Spalte zwischen Klemmverbindungsvorrichtung und geklemmtem Teil) werden. Ebenfalls liegen durch Verwendung des durchgängigen Dichtprofils keine Gewinde offen, da diese vom durchgängigen Dichtprofil umschlossen werden. Es wird weiterhin sichergestellt, dass ein Verbindungsteil leicht gereinigt werden kann, ohne dass Flüssigkeits- oder Reinigungsmittelrückstände in Hohlräumen zurückgehalten werden können, welche das Produkt beim Produktionsprozess verunreinigen könnten. Anlagenteile, welche mit dem durchgängigen Dichtprofil versehen sind, können somit in offenen Prozessen der Lebensmittelindustrie oder lebensmittelverarbeitenden Industrie benutzt werden, da Hygienerisiken aufgrund von zum Beispiel Vertiefungen und Spalten verringert werden.

Im Folgenden wird ein bevorzugtes Ausführungsbeispiel unter Bezugnahme auf die beigefügten Zeichnungen näher erläutert.
Fig. 1 ist eine isometrische Ansicht des durchgängigen Dichtprofils.
Fig. 2 ist eine Schnittansicht des durchgängigen Dichtprofils.
Fig. 3 ist eine Draufsicht von oben auf das durchgängige Dichtprofil.
Fig. 4 ist eine Seitenansicht des durchgängigen Dichtprofils 1.
Fig. 5 ist eine schematische Konfigurationsansicht eines Kreuzklemmstücks ohne Dichtprofil.
Fig. 6 ist eine schematische Konfigurationsansicht eines Kreuzklemmstücks inklusive des durchgängigen Dichtprofils gemäß der vorliegenden Erfindung.
Fig. 7 ist eine Querschnittsansicht eines Kreuzklemmstücks, welches zwei durchgängige Dichtprofile aufnimmt (ein Dichtprofil pro Klemmverbindung).
Fig. 8 ist eine Draufsicht auf ein Kreuzklemmstück, welches zwei durchgängige Dichtprofile 1 aufnimmt (ein Dichtprofil pro Klemmverbindung).
Fig. 9 ist ein Ausschnitt aus einer schematische Konfigurationsansicht eines durchgängigen Dichtprofils bei der Verwendung in einer Klemmverbindung zwischen Klemmvorrichtung und zu klemmendem Teil.

### Erste Ausführungsform

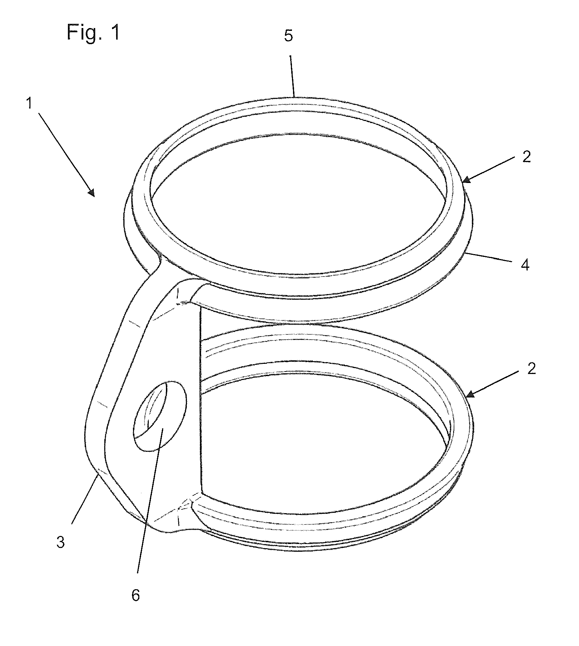

Fig. 1 zeigt das durchgängige Dichtprofil 1 mit zwei Umfangsdichtabschnitten 2 und einem Verbindungsabschnitt 3. Hier wird deutlich, dass der Querschnitt der Umfangsdichtabschnitte 2 in dieser Ausführungsform zweigeteilt ist. Die Umfangsdichtabschnitte 2 besitzen einen keilförmigen unteren Abschnitt 4 sowie Umfangsdichtlippen 5 als oberen Abschnitt. Die Umfangsdichtlippen 5 sind leicht in Richtung der Innenseite des Umfangsdichtabschnitts geneigt ausgebildet. Somit sind die Umfangsdichtlippen etwas zur Innenseite vorgespannt, so dass sie beim Einfügen eines zu klemmenden Teils 12 leicht nach außen bzw. oben gedrückt werden. Der Verbindungsabschnitt 3 besitzt eine kreisförmige Aussparung 6, durch welche eine Schraube gesteckt werden kann.

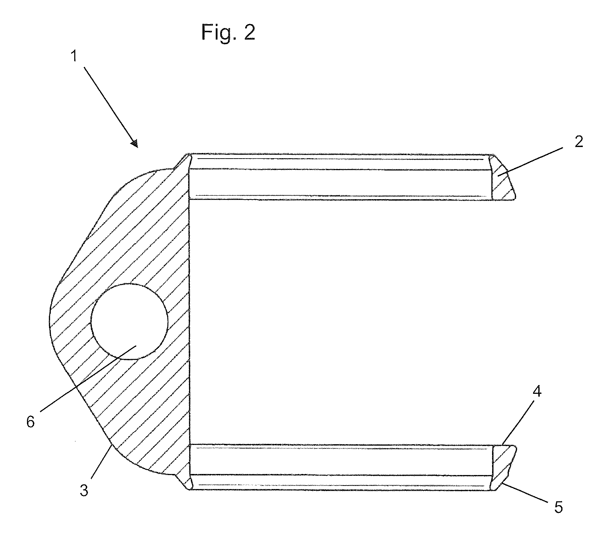

Fig. 2 zeigt eine Schnittansicht des durchgängigen Dichtprofils, welche wiederum die kreisförmige Aussparung 6 im Verbindungsabschnitt 3 zeigt. Mit dieser Abbildung wird der Querschnitt der Umfangsdichtabschnitte 2 nochmals verdeutlicht. Der keilförmige untere Abschnitt 4 sowie die darauf aufgesetzte Umfangsdichtlippe 5 werden detailliert dargestellt. Anhand dieser Figur wird besonders deutlich, dass die innere Umfangsfläche der Umfangsdichtabschnitte 2 keine ebene Fläche ist, sondern zwei Flächen vorhanden sind, welche zueinander einen Innenwinkel zwischen 90° und 180° haben. Wird ein zu klemmendes Teil 12 in die Umfangsdichtabschnitte 2 eingefügt, so kann sich die Umfangsdichtlippe 5 aufbiegen, so dass die innere Umfangsfläche der Umfangsdichtabschnitte 2 im optimalen Fall eine ebene Fläche (180°) darstellt.

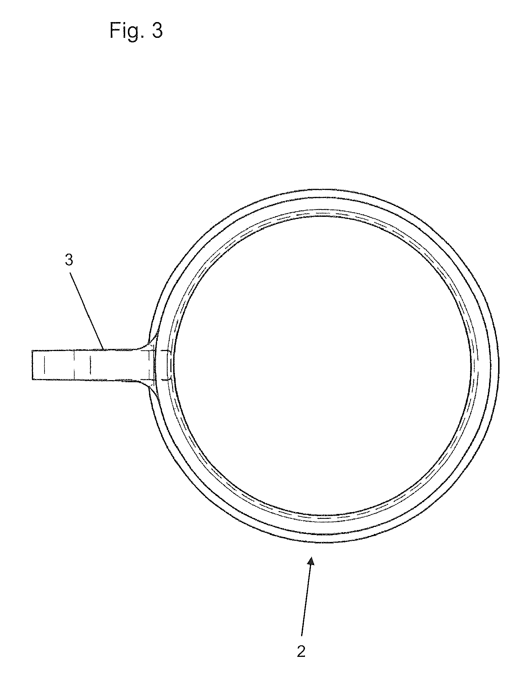

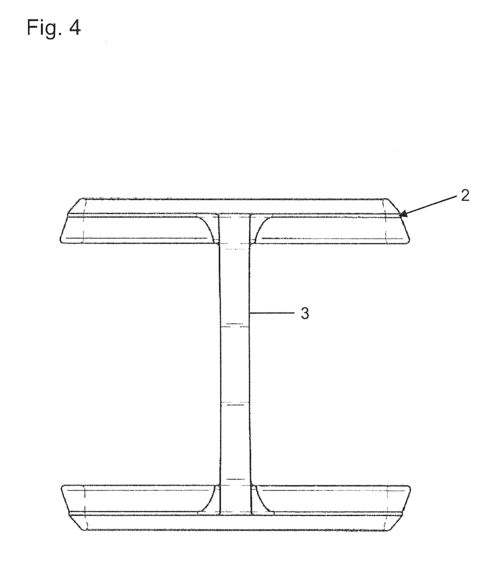

Fig. 3 und Fig. 4 verdeutlichen insbesondere die Ausgestaltung der Verbindung der Umfangsdichtabschnitte 2 und des Verbindungsabschnitts 3, speziell die Verstärkung des Verbindungsabschnitts 3 am Übergang zwischen Verbindungsabschnitt 3 und den Umfangsdichtabschnitten 2 durch einen tangentenstetigen Übergang.

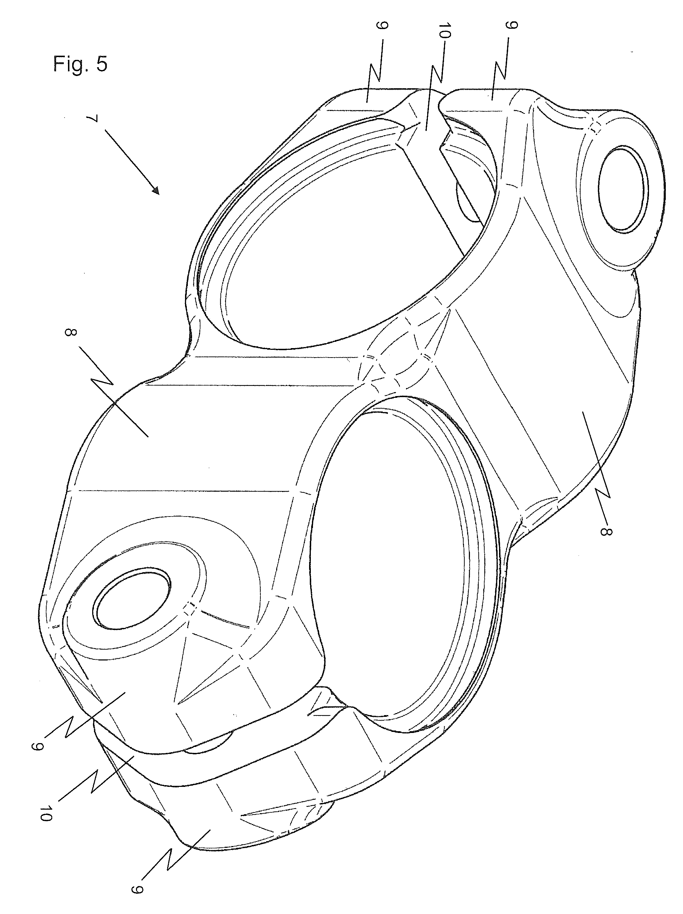

Fig. 5 zeigt ein gegossenes Kreuzklemmstück mit zwei Klemmvorrichtungen 7, welche einen Umfangsabschnitt 8 und zwei sich gegenüberliegende Klemmabschnitte 9 aufweisen, wobei sich zwischen den Klemmabschnitten 9 ein Spannschlitz 10 befindet. Beide Klemmabschnitte 9 sind durch eine Schraube (hier nicht dargestellt) miteinander verbunden.

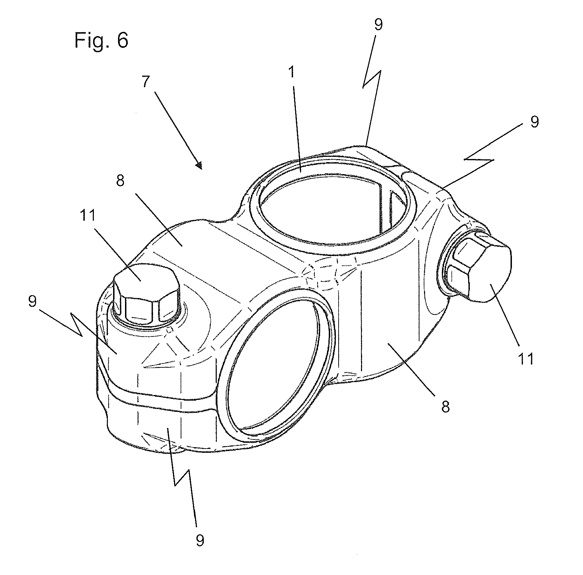

Fig. 6 zeigt das durchgängige Dichtprofil 1, welches von einem gegossenen Kreuzklemmstück aufgenommen wird. Das durchgängige Dichtprofil 1 ist so von der Klemmvorrichtung 7 aufgenommen, dass ein Teil eines Umfangsdichtabschnittes 2 des durchgängigen Dichtprofils 1 über die äußere Kontur der Klemmvorrichtung 7 hinausragt. Auch ist ersichtlich, dass der Umfangsdichtabschnitt 2 mit einer Umfangsdichtlippe 5 ausgebildet ist. Der Verbindungsabschnitt 3 ist zwischen zwei Spannabschnitten 9 der Klemmvorrichtung 7 positioniert.

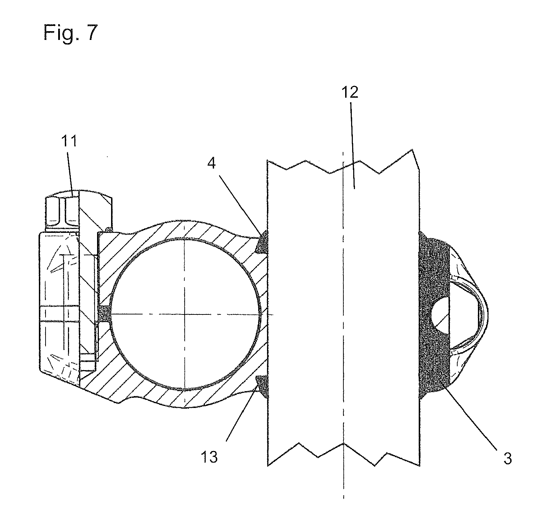

Fig. 7 zeigt eine Querschnittsansicht der Klemmvorrichtung 7, welche das durchgängige Dichtprofil 1 aufnimmt. Hierbei ist ersichtlich, dass in der Klemmvorrichtung 7 jeweils eine Aussparung 13 an der Bohrung für das zu klemmende Teil 12 vorhanden sind, welche einen Teil des Umfangsdichtabschnitts 2 des durchgängigen Dichtprofils 1 aufnimmt. Hierbei liegt die untere Fläche des Umfangsdichtabschnitts 2 des durchgängigen Dichtprofils 1 komplett auf der Bodenfläche der Aussparung 13 auf. Ein Teil des Umfangsdichtabschnittes 2 des durchgängigen Dichtprofils 1, nämlich die Umfangsdichtlippe 5, ragt über die äußere Kontur der Klemmvorrichtung hinaus. Der Umfangsdichtabschnitt 2 liegt mit seiner inneren Umfangsfläche jedoch komplett an dem zu klemmenden Teil 12 an. Ferner füllt in dieser Ausführungsform der Verbindungsabschnitt 3, welcher beide Umfangsdichtabschnitte 2 verbindet, die gesamte Fläche zwischen den Klemmabschnitten 9 der Klemmvorrichtung 7, das bedeutet den gesamten Spannschlitz 10, aus. In diesem Verbindungsabschnitt 3 ist die kreisförmige Aussparung 6 vorgesehen, welche genauso groß ist wie der Außendurchmesser einer Schraube 11, welche zum Spannen der Klemmabschnitte 9 der Klemmvorrichtung 7 vorgesehen ist. Zudem ist der Verbindungsabschnitt 3 so ausgebildet, dass er mit einer Seitenfläche komplett am zu klemmenden Teil 12 anliegt.

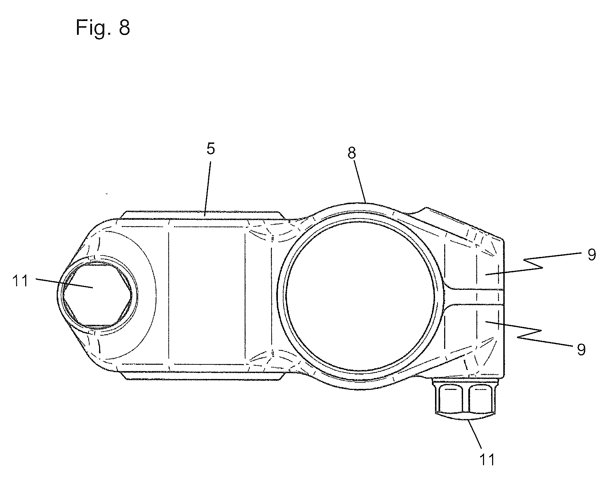

Fig. 8 zeigt eine Draufsicht auf das durchgängige Dichtprofil 1, welches von einem Kreuzklemmstück aus Guss aufgenommen wird. Hierbei wird die Anordnung der beiden Umfangsdichtabschnitte 2 und des Verbindungsabschnitts 3 verdeutlicht. Hierbei ist der Verbindungsabschnitt 3 am Übergang zu einem Umfangsdichtabschnitt 2 mit einem Radius ohne scharfe Kante ausgeführt, wobei ein tangentenstetiger Übergang gewährleistet wird. Der Verbindungsabschnitt 3 ist zudem am Übergang zu einem Umfangsdichtabschnitt 3 leicht verdickt, was zu einer erhöhten Stabilität und Reißfestigkeit führt, und ist so außerdem der Form der Klemmvorrichtung 7 angepasst. Durch das Spannen der Klemmabschnitte 9 durch Anziehen der Schraube 11 zur Kraftübertragung auf das zu klemmende Teil 12 muss es möglich sein, dass die Dicke des Verbindungsabschnittes 3 variabel ist, das heißt, sich abhängig von der Breite des Spannschlitzes 10 verändert. Durch unterschiedliche Spannung der Klemmabschnitte 9 müssen außerdem die Umfangsdichtabschnitte 2 elastisch sein, um sich der Form der Umfangsabschnitte 8 und Klemmabschnitte 9 der Klemmvorrichtung 7 bei jedem Spannungszustand der Klemmabschnitte 9 der Klemmvorrichtung 7 anzupassen, ohne dass dabei Spalten bzw. Lücken entstehen. Die Umfangsdichtabschnitte 2 müssen also in ihrem Querschnitt ebenfalls variabel, d.h. elastisch, sein.

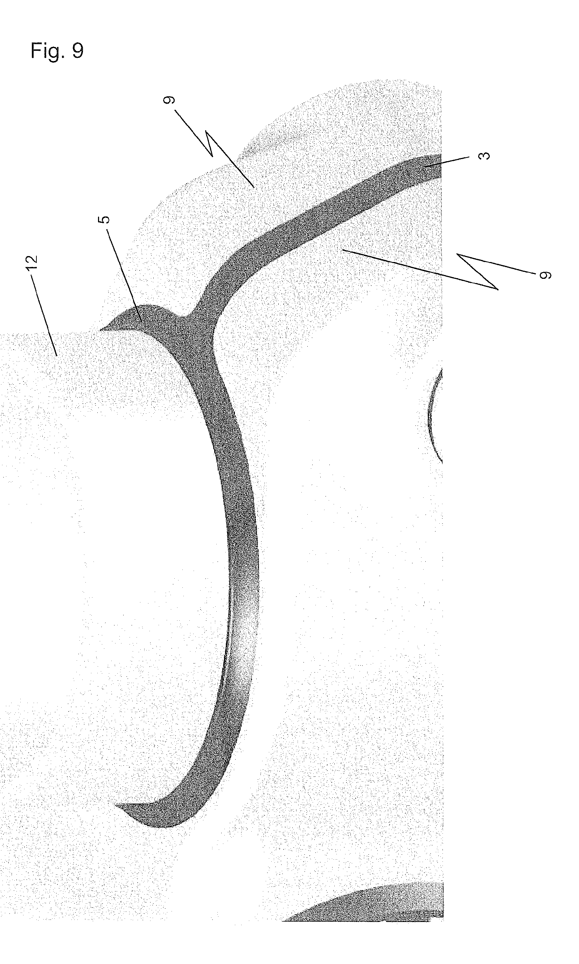

In Fig. 9 wird ein vergrößerter Ausschnitt eines Systems aus Klemmvorrichtung 7 aus Guss und durchgängigem Dichtprofil 1 gezeigt, welches in diesem Fall ein geklemmtes Teil 12 aufgenommen hat. Wie aus dieser Abbildung deutlich wird, wird von einem Umfangsdichtabschnitt 2 der untere Abschnitt 4 durch die Aussparung 13 der Klemmvorrichtung 7 aufgenommen, wobei die Umfangsdichtlippe 5 nur oberhalb der Klemmvorrichtung 7 positioniert ist und somit mit dieser nicht in direktem Kontakt steht. Somit übt die Klemmvorrichtung 7 keine direkten Kompressionskräfte auf die Umfangsdichtlippe 5 des Umfangsdichtabschnitts 2 aus. Durch die Vorspannung liegt die Umfangsdichtlippe 2 jedoch - im gespannten wie auch im ungespannten Zustand - eng am Klemmabschnitt 9 der Klemmvorrichtung 7 an. Wird der untere Abschnitt 4 des Umfangsdichtabschnittes 2 durch die Klemmvorrichtung 7 stark komprimiert, so liegt die Umfangsdichtlippe 5 durch deren Vorspannung im nicht komprimierten Zustand immer noch eng an dem zu klemmenden Teil 12 an, so dass keine Spalte entstehen.

Das durchgängige Dichtprofil 1 kann beispielsweise durch Spritzguss oder 3D-Druck hergestellt werden. Alternativ ist ein "Umspritzen" der Klemmvorrichtung 7 inklusive dem geklemmten Teil 12 möglich.

In einem Verbindungsstück bzw. einem Anlagenteil können zwei oder mehrere Klemmvorrichtungen 7, welche jeweils mit einem durchgängigen Dichtprofil 1 versehen sind, vorgesehen sein. Ein Verbindungsstück, z.B. ein Kreuzklemmstück mit zwei Klemmvorrichtungen 7, kann beispielsweise durch Guss hergestellt sein.

### Zweite Ausführungsform

Eine zweite Ausführungsform ist vom Aufbau und der Gestaltung ähnlich der ersten Ausführungsform. Der untere Abschnitt 4 des Umfangsdichtabschnittes 2 ist jedoch mit Widerhaken zur besseren Fixierung ausgestaltet, die das durchgängige Dichtprofil 1 in einer Klemmvorrichtung 7 fixieren. Die Aussparung in der Klemmvorrichtung 7 ist dementsprechend ausgestaltet, so dass die Widerhaken von dieser aufgenommen werden können.

### Weitere Ausführungsformen

Die vorliegende Erfindung ist nicht auf die oben genannten Ausführungsformen beschränkt. Beispielsweise wäre es möglich, dass die Umfangsdichtabschnitte 2 des durchgängigen Dichtprofils 1 einen kreisförmigen Querschnitt und somit die Form eines 0-Ringes besitzen. Weiterhin ist es möglich, dass das zu klemmende Teil 12 keinen runden Querschnitt besitzt, so wie dies in den Figuren dargestellt ist. Ebenfalls möglich sind dreieckige, viereckige oder mehreckige Querschnitte des zu klemmenden Teils 12, an die der Umfangsabschnitt 8 sowie die Klemmabschnitte 9 der Klemmvorrichtung 7 dann dementsprechend angepasst werden müssen. Der Umfangsdichtabschnitt 2 des durchgängigen Dichtprofils 1 wäre in diesem Fall ebenfalls in seiner Form anzupassen.

Die vorliegende Erfindung betrifft ein durchgängiges Dichtprofil 1 zur Verwendung in einer Klemmvorrichtung 7, welches aus zwei Umfangsdichtabschnitten 2 sowie einem Verbindungsabschnitt 3 besteht und so beschaffen ist, dass die Umfangsdichtabschnitte 2 das zu klemmende Teil 12 umfassen und den Spalt zwischen der Klemmvorrichtung 7 und dem zu klemmenden Teil 12 somit abdichten, und der Verbindungsabschnitt 3 mit den Außenkonturen der Klemmabschnitte 9 abschließt und den Spannschlitz 10 zwischen den Klemmabschnitten 9 der Klemmvorrichtung 7 somit nach außen abdichtet. Die vorliegende Erfindung trägt zur hygienegerechten Ausgestaltung von Kreuzklemmstücken bei und kommt daher beispielsweise in Kreuzklemmstücken von Anlagenteilen der Lebensmittelindustrie oder Lebensmittel verarbeitenden Industrie zum Einsatz. Durch das durchgängige Dichtprofil 1 werden Hohlräume und Spalten abgedichtet um unter anderem ein Wachstum von Mikroorganismen zu verhindern und um sicherzustellen, dass das Anlagenteil leicht zu reinigen ist, ohne dass sich Rückstände von Reinigungsmitteln oder ähnlichem ansammeln können.

## Patentansprüche

1. Dichtprofil (1) zum Abdichten einer Klemmvorrichtung (7) mit einem Umfangsabschnitt (8) sowie zwei sich gegenüberliegenden Klemmabschnitten (9), zwischen denen sich ein Spannschlitz (10) befindet, zur Klemmung von geklemmten Teilen (12), wobei das Dichtprofil (1) hygienegerecht gestaltet ist, indem es sowohl den Spannschlitz (10) zwischen den Klemmabschnitten (9) als auch Profilschlitze zwischen den Umfangsabschnitten (8) sowie Klemmabschnitten (9) und den geklemmten Teilen (12) lückenlos abdichtet, und das Dichtprofil (1) zwei Umfangsdichtabschnitte (2) und mindestens einen Verbindungsabschnitt (3) aufweist, wobei die Umfangsdichtabschnitte (2) den äußeren Umfang des geklemmten Teils (12) umfassen und der Verbindungsabschnitt (3) beide Umfangsdichtabschnitte (2) verbindet und so ausgebildet ist, dass er an die Außenkontur der Klemmabschnitte (9) angepasst ist und mit diesen abschließt, wobei das Dichtprofil (1) durchgängig und aus einem Stück ausgebildet ist.

2. Dichtprofil (1) gemäß Anspruch 1, wobei das Dichtprofil (1) aus einem Elastomer, vorzugsweise Silikon, höchst vorzugsweise Silikon mit Lebensmittelzulassung, ausgebildet ist.

3. Dichtprofil (1) gemäß Anspruch 1 oder 2, wobei die Umfangsdichtabschnitte (2) des Dichtprofils (1) ringförmig ausgebildet sind.

4. Dichtprofil (1) gemäß Anspruch 1 bis 3, wobei die Umfangsdichtabschnitte (2) des Dichtprofils (1) aus einem unteren Abschnitt (4) sowie einer Umfangsdichtlippe (5) bestehen, wobei die innere Umfangsflächen des unteren Abschnitts (4) und der Umfangsdichtlippe (5) nicht in einer Ebene liegen.

5. Dichtprofil (1) gemäß Anspruch 4, wobei der Winkel zwischen der innere Umfangsflächen des unteren Abschnitts (4) und der Umfangsdichtlippe (5) minimal 90°C, maximal 180° beträgt.

6. Dichtprofil (1) gemäß einem der vorhergehenden Ansprüche, wobei der Verbindungsabschnitt (3) eine kreisförmige Aussparung (6) aufweist.

7. Dichtprofil (1) gemäß Anspruch 1, wobei die Umfangsdichtabschnitte (2) und der Verbindungsabschnitt (3) unter Druck elastisch verformbar ausgebildet sind.

8. System aus Klemmvorrichtung (7) und Dichtprofil (1) gemäß einem der vorhergehenden Ansprüche, wobei in der Klemmvorrichtung (7) eine Aussparung (13) vorgesehen ist, von welcher die Umfangsdichtabschnitte (2) des durchgängigen Dichtprofils (1) aufnehmbar sind.

9. Klemmverbindungsvorrichtung, welche zwei oder mehrere Systeme aus Klemmvorrichtung (7) und Dichtprofil (1) gemäß Anspruch 8 aufweist.

10. System aus Klemmvorrichtung (7) und Dichtprofil (1) gemäß Anspruch 8, wobei die Klemmvorrichtung (7) durch das Dichtprofil (1) sowohl im gespannten als auch ungespannten Zustand dadurch abgedichtet wird, dass die Umfangsdichtabschnitte (2) so durch Vorspannung ausgebildet sind, dass sie eng am geklemmten Teil (12) anliegen.

11. Verwendung eines Systems aus Klemmvorrichtung (7) und Dichtprofil (1) gemäß Anspruch 9 in einem Anlagenteil in der Lebensmittel verarbeitenden Industrie.

12. Verwendung nach Anspruch 11, **dadurch gekennzeichnet, dass** das Anlagenteil in einer Waage, vorzugsweise einer Kombinationswaage, verwendet wird.

## Claims

1. Sealing profile (1) for sealing of a clamping means (7) with a circumferential section (8) and two opposing clamping sections (9), between which there is a clamping slit (10) for clamping of clamped parts (12), wherein the sealing profile (1) has a hygienic design by sealing both the clamping slit (10) between the clamping sections (9) and profile slits between the circumferential sections (8) and clamping sections (9) and the clamped parts (12) without any gaps, and the sealing profile (1) comprises two circumferential sealing sections (2) and at least one connecting section (3), wherein the circumferential sealing sections (2) clasp the outer circumference of the clamped part (12) and the connecting section (3) connects both circumferential sealing sections (2) and is formed in a way, that it is adapted to the outer contour of the clamping sections (9) and ends with them, wherein the sealing profile (1) is formed continuously and in one part.

2. Sealing profile (1) according to claim 1, wherein the sealing profile (1) is formed from an elastomer, preferably silicone, more preferably silicone with certification for food.

3. Sealing profile (1) according to claim 1 or 2, wherein the circumferential sealing sections (2) of the sealing profile (1) are formed ring-shaped.

4. Sealing profile (1) according to claims 1 to 3, wherein the circumferential sealing sections (2) of the sealing profile (1) consist of a lower section (4) and a circumferential sealing lip (5), wherein the inner circumferential areas of the lower section (4) and of the circumferential sealing lip (5) do not lie within one plane.

5. Sealing profile (1) according to claim 4, wherein the angle between the inner circumferential areas of the lower section (4) and the circumferential sealing lip (5) is at least 90°, at maximum 180°.

6. Sealing profile (1) according to one of the preceding claims, wherein the connecting section (3) comprises a discshaped recess (6).

7. Sealing profile (1) according to claim 1, wherein the circumferential sealing sections (2) and the connecting section (3) are formed that they are elastically deformable under pressure.

8. System comprising a clamping means (7) and sealing profile (1) according to one of the preceding claims, wherein a recess (13) is provided in the clamping means (7), of which the circumferential sealing sections (2) of the continuous sealing profile (1) are accomodatable.

9. Clamp connection means, comprising two or more systems consisting of clamping means (7) and sealing profile (1) according to claim 8.

10. System of clamping means (7) and sealing profile (1) according to claim 8, wherein the clamping means (7) is sealed by the sealing profile (1) both in the tightened and the untightened state by means that the circumferential sealing sections (2) are formed via pre-tension in a way, that they fit tightly to the clamped part (12).

11. Use of a system of clamping means (7) and sealing profile (1) according to claim 9 in a plant part in the food processing industry.

12. Use according to claim 11, **characterized in that** the plant part is used in a weighing device, preferably in a combination weighing device.

## Revendications

1. Joint d'étanchéité profilé (1) servant à rendre étanche un dispositif de blocage (7) comprenant une section périphérique (8) ainsi que deux sections de blocage (9) se faisant face, entre lesquelles se trouve une rainure de serrage (10) servant à bloquer des pièces (12) bloquées, dans lequel le joint d'étanchéité profilé (1) est configuré de manière conforme à l'hygiène en ce qu'il rend étanche sans interruption aussi bien la rainure de serrage (10) entre les sections de blocage (9) que les rainures profilées entre les sections périphériques (8) et les sections de blocage (9) et les pièces (12) bloquées, et le joint d'étanchéité profilé (1) présente deux sections étanches périphériques (2) et au moins une section de liaison (3), dans lequel les sections étanches périphériques (2) comprennent la périphérie extérieure de la partie (12) bloquée et la section de liaison (3) relie les deux sections étanches périphériques (2) et est configurée de telle sorte qu'elle est adaptée au contour extérieur des sections de blocage (9) et se termine par ces dernières, dans lequel le joint d'étanchéité profilé (1) est réalisé de manière continue et d'un seul tenant.

2. Joint d'étanchéité profilé (1) selon la revendication 1, dans lequel le joint d'étanchéité profilé (1) est réalisé à partir d'un élastomère, de préférence d'une silicone, de manière la plus préférée à partir d'une silicone agréée pour le contact alimentaire.

3. Joint d'étanchéité profilé (1) selon la revendication 1 ou 2, dans lequel les sections étanches périphériques (2) du joint d'étanchéité profilé (1) sont réalisées de manière à présenter une forme annulaire.

4. Joint d'étanchéité profilé (1) selon la revendication 1 à 3, dans lequel les sections étanches périphériques (2) du joint d'étanchéité profilé (1) sont constituées d'une section inférieure (4) ainsi que d'une lèvre étanche périphérique (5), dans lequel les sections périphériques intérieures de la section inférieure (4) et de la lèvre étanche périphérique (5) ne se trouvent pas dans un plan.

5. Joint d'étanchéité profilé (1) selon la revendication 4, dans lequel l'angle entre les surfaces périphériques intérieures de la section inférieure (4) et de la lèvre étanche périphérique (5) présente au minimum une valeur de 90°, au maximum de 180°.

6. Joint d'étanchéité profilé (1) selon l'une quelconque des revendications précédentes, dans lequel la section de liaison (3) présente un évidement (6) de forme circulaire.

7. Joint d'étanchéité profilé (1) selon la revendication 1, dans lequel les sections étanches périphériques (2) et la section de liaison (3) sont réalisées de manière à pouvoir être déformées élastiquement sous pression.

8. Système composé d'un dispositif de blocage (7) et d'un joint d'étanchéité profilé (1) selon l'une quelconque des revendications précédentes, dans lequel est prévu dans le dispositif de blocage (7) un évidement (13), duquel les sections étanches périphériques (2) du joint d'étanchéité profilé (1) continu peuvent être retirées.

9. Dispositif de liaison de blocage, qui présente deux ou plusieurs systèmes composés d'un dispositif de blocage (7) et d'un joint d'étanchéité profilé (1) selon la revendication 8.

10. Système composé d'un dispositif de blocage (7) et d'un joint d'étanchéité profilé (1) selon la revendication 8, dans lequel le dispositif de blocage (7) est rendu étanche par le joint d'étanchéité profilé (1) aussi bien dans l'état serré que dans l'état desserré en ce que les sections étanches périphériques (2) sont réalisées de telle manière par une précontrainte qu'elles reposent de manière bien ajustée au niveau de la pièce (12) bloquée.

11. Utilisation d'un système composé d'un dispositif de blocage (7) et d'un joint d'étanchéité profilé (1) selon la revendication 9 dans une pièce d'installation d'appui dans l'industrie agroalimentaire.

12. Utilisation selon la revendication 11, **caractérisée en ce que** la pièce d'installation est utilisée dans une balance, de préférence dans une balance de combinaison.
